# EUROPEAN PATENT SPECIFICATION

(11) **EP 0 933 315 B1**
(45) Date of publication and mention of the grant of the patent: **14.12.2005**
(21) Application number: 97943193.9
(22) Date of filing: 14.10.1997
(51) Int. Cl.: A01C 1/04, A01C 11/04, B65G 47/24

(54) **ALIGNMENT DEVICE**
AUSRICHTVORRICHTUNG
DISPOSITIF D'ALIGNEMENT

(30) Priority: 01.05.1997 JP 12812797
(43) Date of publication of application: 04.08.1999
(73) Proprietor: YANMAR AGRICULTURAL EQUIPMENT Co., Ltd., Osaka 530 (JP)
(72) Inventor: YAMADA, Hisaya Yanmar Agricultural Equip. Co. Ltd., Osaka-shi Osaka 530 (JP); BUNO, Setsuo Yanmar Agricultural Equip. Co. Ltd., Osaka-shi Osaka 530 (JP); OMAE, Kensuke Yanmar Agricultural Equip.Co. Ltd., Osaka-shi Osaka 530 530 (JP); ISHIHARA, Yukinobu Yanmar Agricult. Equipm. Co.Ltd, Osaka-shi Osaka 530 (JP); UEYAMA, Masanao Showa Precision Machinery Co., Ltd, Amagasaki-shi Hyogo 661 (JP); ANBE, Yoshinori Showa Precision Machinery Co., Ltd, Amagasaki-shi HHyogo 661 (JP); INOUE, Takuo Showa Precision Machinery Co., Ltd., Amagasaki-shi Hyogo 661 (JP)
(74) Representative: Seeger, Wolfgang
(86) International application number: PCT/JP1997/003677
(87) International publication number: WO 1998/050296

(56) References cited:
- DE-U- 8 403 105
- FR-A- 2 453 802
- FR-A- 2 739 835
- GB-A- 2 214 500
- US-A- 4 005 805

## Description

### FIELD OF THE INVENTION

The present invention relates to an alignment apparatus, such as a seeding machine which, in a pre-process of grafting vegetable seedlings such as cucumbers and pumpkins, aligns and seeds flat seeds of the vegetables so as to align cotyledon of the vegetable seedlings in a substantially uniform direction, and various work machines which align harvested products such as cucumbers in a uniform direction and mechanically select, pack, and process the products.

An alignment apparatus corresponding to the upper clause of claim 1 is known from FR-A-2 453 802.

### DESCRIPTION OF RELATED ART

There has been grafting means as one of means for automatically grafting vegetable seedlings, for example. This grafting means binds upper and lower portions of a stem of a stock and scion nursery plant transported on a transport line using a binding hand, and cuts a middle portion of the held stock and scion nursery plant using a cutter, and grafts the lower stem of the cut stock on the upper stem of the scion nursery plant. However, in this grafting method, since the grafting is carried out in the vicinity of the base portions where cotyledons of the seedlings are developed, it is necessary to bind the base portions where the cotyledons are developed by using the binding hand.

In this case, since the base portions easily slip off from the binding hand depending on the developing directions of the cotyledons, namely, stability is not obtained, it is desirable to align the direction of the binding hand with the direction of the cotyledons so as to bind them. For this reason, the directions of the cotyledons of the seedlings are aligned in the pre-process of seeding, and the alignment and seeding has been carried out by utilizing an image processing, but the cost becomes extremely high and also the workability is low. Therefore, there is also means, which has a simple constitution using a seed shooter and seeding shutter, for regulating a discharging posture of flat seeds using a rectangular opening having a long and short side of the seed shooter so as to carry out the aligned seeding. However, only such an opening of the seed shooter does not completely stabilize the discharging posture of the seeds, so the alignment accuracy is not good.

Moreover, in the case where the harvested products such as cucumbers are selected, packed, and processed, it is necessary to previously align the postures of the products in a uniform direction. If this work is carried out manually, a lot of time is required, so the working efficiency is low. Contrarily, in the case this work is carried out mechanically, a system becomes complicated and expensive, and also in the case where shapes of the products are varied, reliability in selection, packing, and process is not obtained.

### SUMMARY OF THE INVENTION

The present invention refers to an alignment apparatus according to claim 1 and an alignment apparatus for a seeding machine according to claim 2. Further embodiments are described in the dependent claims.

### BRIEF DESCRIPTION OF THE DRAWINGS

FIG. 1 is a control circuit diagram.
FIG. 2 is a whole plan view.
FIG. 3 is an explanatory side view showing a seeding machine.
FIG. 4 is an explanatory plan view showing the seeding machine.
FIG. 5 is an explanatory drawing of an operation of the seeding machine.
FIG. 6 is an explanatory drawing of a nozzle suction portion.
FIG. 7 is an explanatory side view showing a seeding shutter portion.
FIG. 8 is an explanatory drawing of a seeding tray.
FIG. 9 is an explanatory drawing of an operation of the seeding shutter portion.
FIG. 10 is a flow chart.
FIG. 11 is an operational chart of the seeding shutter.
FIG. 12 is a speed chart when the seeding shutter is under an opening operation.
FIG. 13 is an explanatory drawing of a constant-amount seeding device.
FIG. 14 is an explanatory drawing of a seed shooter.
FIG. 15 is a control circuit diagram.
FIG. 16 is a flow chart.
FIG. 17 is an explanatory drawing of a cucumber packing machine.
FIG. 18 is an explanatory drawing of the seed shooter and seeding shutter in the cucumber packing machine.
FIG. 19 is another explanatory drawing of the cucumber packing machine.
FIG. 20 is an explanatory side view showing a two-step opening example of the seeding shutter.
FIG. 21 is an explanatory plan view showing the two-step opening example of the seeding shutter.

### DESCRIPTION OF THE PREFERRED EMBODIMENTS

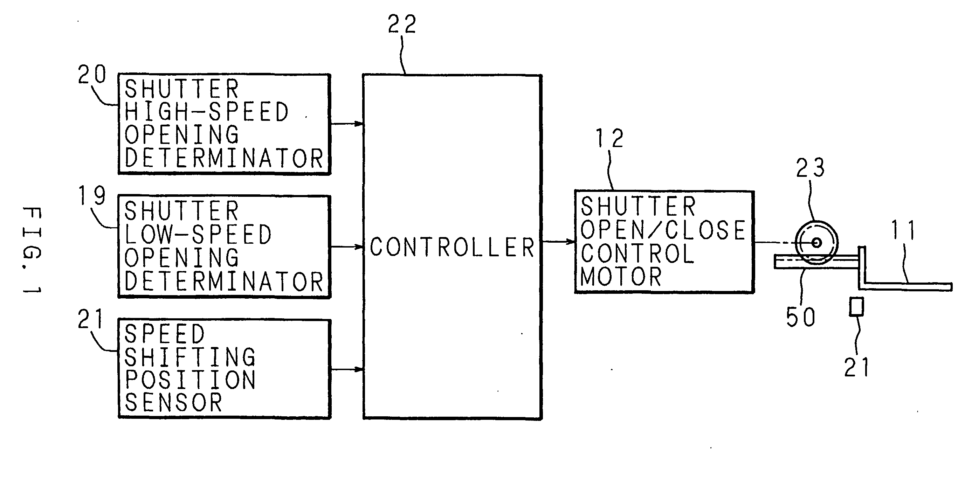

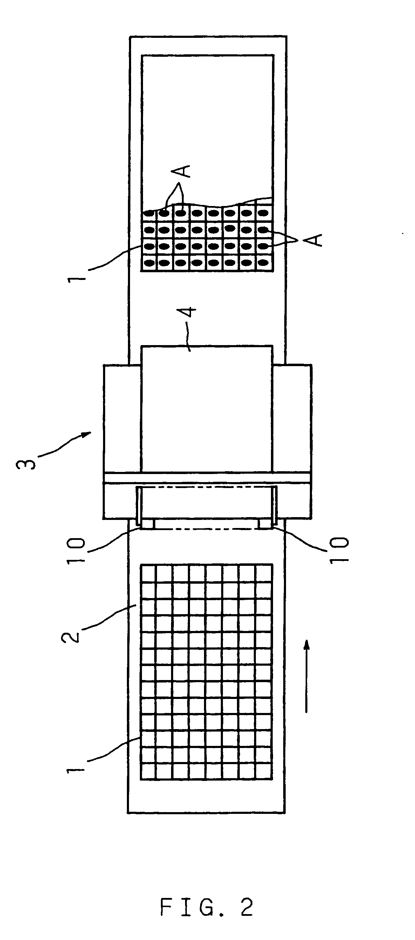

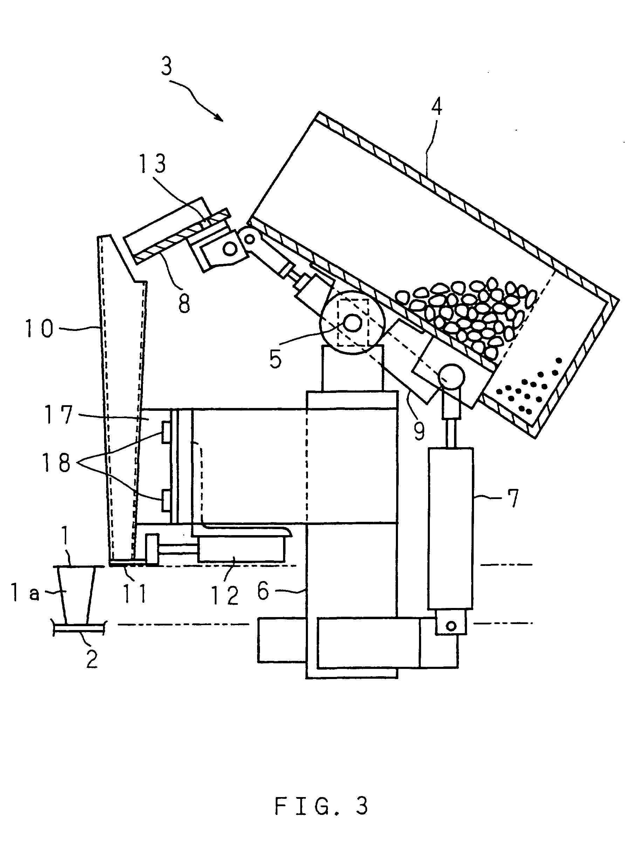

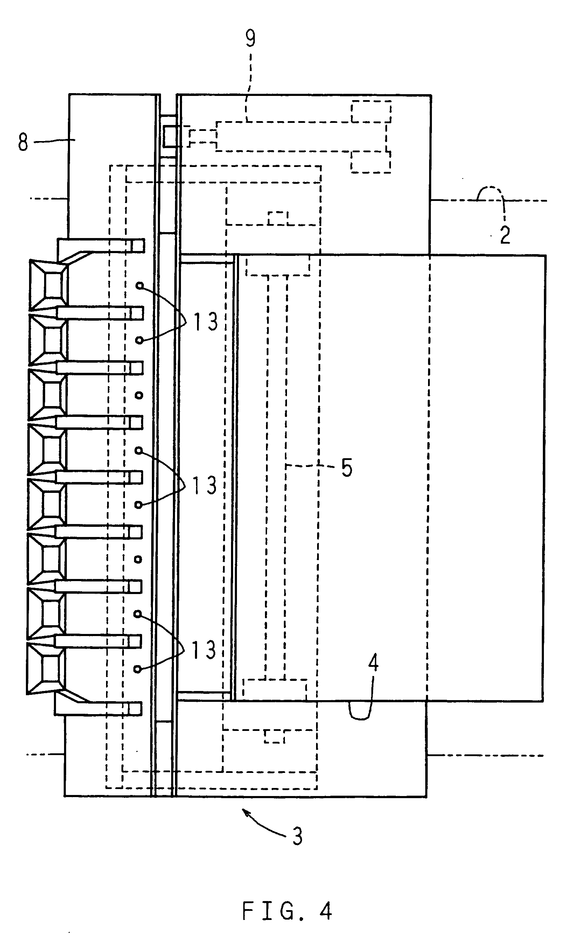

The present invention will now be described in detail referring to the accompanying drawings illustrating the embodiments thereof. FIG. 1 is a control circuit diagram, FIG. 2 is a whole plan view, FIG. 3 is an explanatory side view showing a seeding machine, FIG. 4 is an explanatory plan view showing the seeding machine, and a seeding machine 3 is provided on a seeding conveyor 2 which transports a seeding tray 1.

The seeding machine 3 has a seed hopper 4, a hopper receiver 6, an electro-hydraulic-air hopper swinging cylinder 7, a seed supply plate 8, an electro-hydraulic-air supply plate open/close cylinder 9, a seed shooter 10, a seeding shutter 11, and a shutter open/close control motor 12. The seed hopper 4 stores flat seeds A such as cucumbers and pumpkins to be aligned. The hopper receiver 6, which is fixed to a rest of the seeding conveyor 2, supports a middle portion of the seed hopper 4 via a swing support shaft 5 so as to be swingable to forward and backward. The hopper swinging cylinder 7, which is provided between the seed hopper 4 and hopper receiver 6, swings the seed hopper 4 forward and backward. The seed supply plate 8 is provided at an opening of the seed hopper 4 which is on the opposite side of the hopper swinging cylinder 7 so as to open/close the opening. The supply plate open/close cylinder 9 allows the seed supply plate 8 to open/close the opening. The seed shooter 10 is a guide member which brings an upper end opening portion below the opened position of the seed supply plate 8. The seeding shutter 11 is a mounting member, which is provided closely to the upper surface of the seeding tray 1 on the seeding conveyor 2 and which opens/closes a lower end opening of the seed shooter 10 and places the seeds A in the state the lower end opening is opened. The shutter open/close control motor 12 opens/closes the seeding shutter 11. The seeding machine 3 is constituted so that seeds taken out of the seed hopper 4 onto the seed supply plate 8 one by one are discharged down into respective pot portions 1a of the seeding tray 1 via the seed shooter 10 so that seeding is carried out.

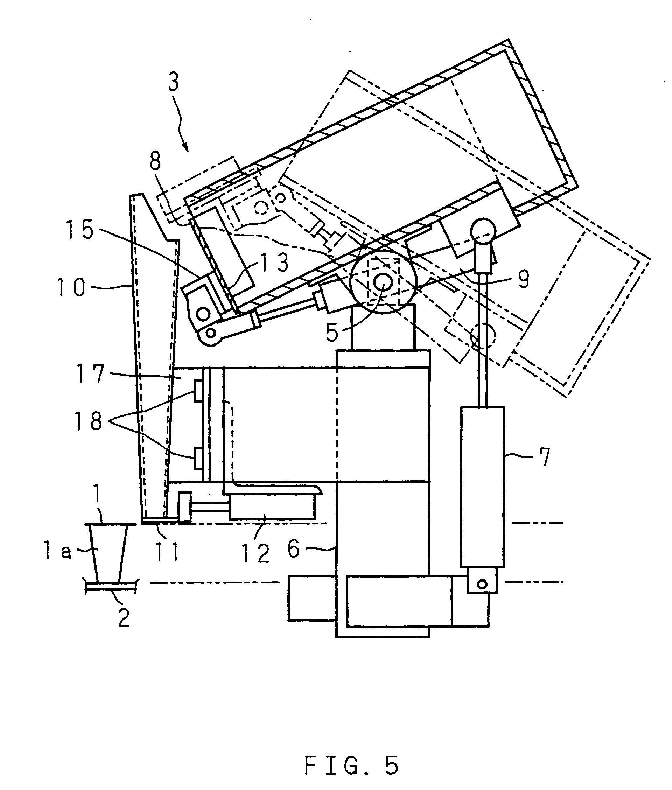

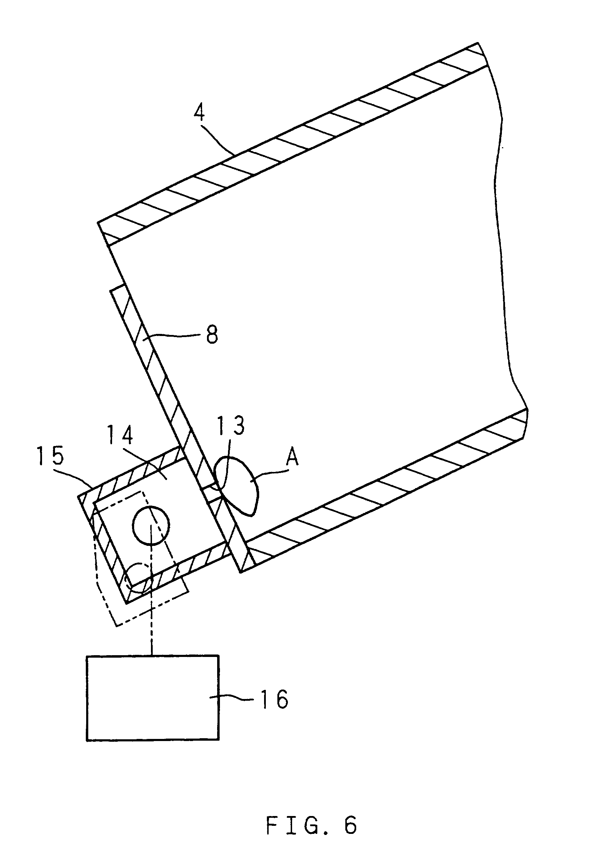

As shown in FIGS. 5 and 6, nozzle holes 13 for sucking seeds is formed in the seed supply plate 8 correspondingly to the pot portions 1a arranged laterally (right-and-left) in the seeding tray 1, and suction paths 14 which interconnect to each nozzle hole 13 are formed in a suction case 15 so that the seeds A are sucked one by one into each nozzle hole 13 in the seed supply plate 8 by a vacuum suction force of an absorber 16 such as a vacuum pump which is connected with the suction paths 14.

As shown in FIG. 5, the seeds A are sucked into the nozzle holes 13 by the suction force of the absorber 16 in the state the seed supply plate 8 is in the closed state while the seed hopper 4 is swung once or twice from a forward-down and backward-up posture to a forward-up and backward-down posture or the forward-up and backward-down posture to the forward-down and forward-up posture. As shown in FIG. 3, when the seed hopper 4 is maintained in the forward-up and backward-down posture and the seed supply plate 8 is in the open state, the suction of the nozzle holes 13 is stopped so that the seeds A on the seed supply plate 8 are introduced into the seed shooter 10.

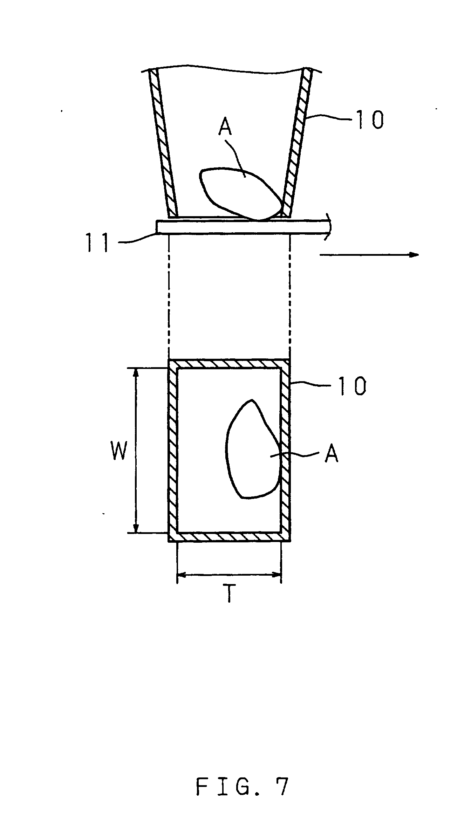

As shown in FIG. 7, the seed shooter 10 is formed so as to have a rectangular cross section in plane view, and to be narrowed at a lower end. Moreover, the seed shooter 10 is formed so that a longitudinal width T in the forward-backward direction of the lower end cross section is slightly larger than a short diameter portion of the seeds A, and a transversal width W is larger than the longitudinal width T (W>T) and is slightly larger than a long diameter portion of the seeds A. A longitudinal direction of the seeds A is aligned with the right-and-left transversal direction to a certain degree while the seed shooter 10 drops down, and the seeding shutter 11 is brought into the open state, and when the seeds A are discharged from the seed shooter 10, the seeds A are brought into contact with an inner side surface on the backward side of the seed shooter 10 by a slide-opening force of the seeding shutter 11 which substantially intersects perpendicularly to the transversal width W. As a result, seeds which are not uniform only by the seed shooter 10 (for example, the seeds in the standing posture) are aligned in a substantially uniform direction, namely, in the right-and-left transversal direction. Here, besides the seed shooter 10 having a rectangular cross section, any seed shooters may be used as long as they have a longer and shorter portion, such as oval shapes.

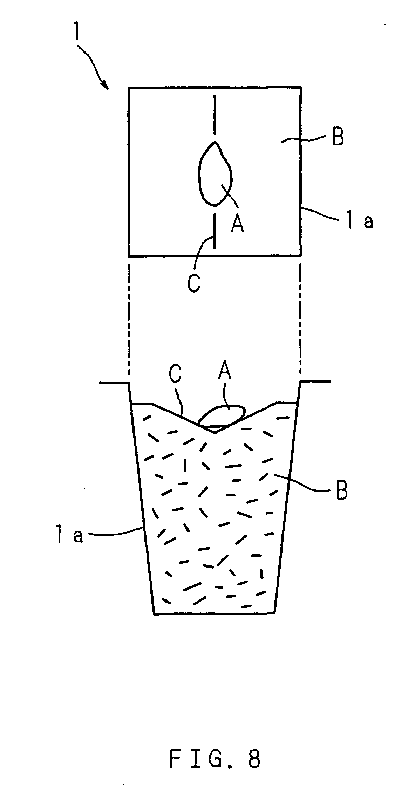

Meanwhile, as shown in FIG. 8, a seeding groove C having a V-shape viewed from the side is previously formed on a surface of nutritious solid B charged into each pot portion 1a of the seeding tray 1 by using a suppressing tool or the like, and it helps the posture of the seeds A in the transversal direction discharged from the seed shooter 10 to be maintained so that the alignment accuracy is further improved.

As shown in FIG. 5, the seed shooters 10 whose number accords with a number of the nozzle holes 13 are mounted integrally to a mounting plate 17, and they are fixed onto the hopper receiver 6 via bolts 18 so as to be replaceable with ones having various shapes according to types of the seeds A.

As shown in FIG. 1, the shutter open/close control motor 12 changes the open/close speed of the seeding shutter 11 suitably with a rotational speed of the shutter open/close control motor 12 being shifted by controlling a voltage, resistance, or magnetic field. The shutter open/close control motor 12 has a shutter low-speed opening determinator 19, which determines a low-speed value when the seeding shutter 11 is opened at a low-speed, a shutter high-speed opening determinator 20, which determines a high-speed value when the seeding shutter 11 is opened at a high-speed, and a speed shifting position sensor 21, which shifts the opening speed of the seeding shutter 11 from the low-speed to the high-speed based on results of detecting the opening. The opening determinators 19 and 20 and the speed shifting position sensor 21 are connected with the shutter open/close control motor 12 via a controller 22, and the opening/closing speed of the seeding shutter 11 is changed suitably via a pinion 23 and a rack gear 50 by changing the speed of the shutter open/close control motor 12.

When the hopper swinging cylinder 7 is extended and contracted so as to swing the seed hopper 4 once or twice forward and backward about the swing support shaft 5 while the seed supply plate 8 is in the closed state, the nozzle holes 13 suck the seeds A, and this swinging operation makes it possible that all the nozzle holes 13 suck the seeds A securely.

The posture of the seed hopper 4 is changed into the forward-up and backward-down posture, and the seed supply plate 8 which closes the opening portion of the seed hopper 4 is brought into the open state. Then, the suction of the nozzle holes 13 by the absorber 16 is stopped, and the seeds A on the seed supply plate 8 are introduced down into the seed shooter 10. Next, when the seeding shutter 11 is operated to be opened, seeding is carried out into each pot portion 1a of the seeding tray 1. At this time, the longitudinal directions of the seeds A are aligned with the transversal direction by rectangular regulation of the seed shooter 10 and a pulling action during the opening of the seeding shutter 11, and thus the aligned seeding are carried out.

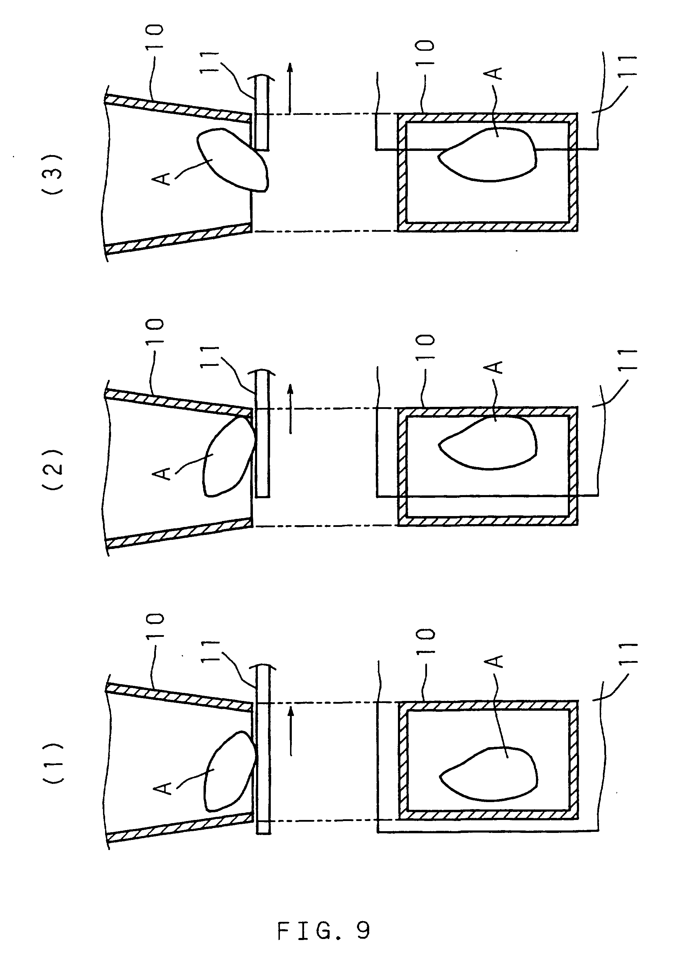

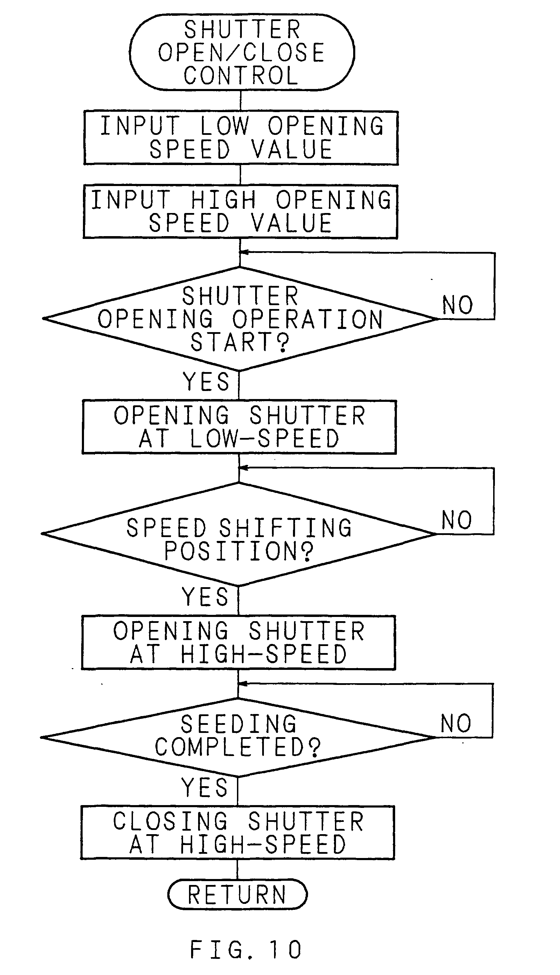

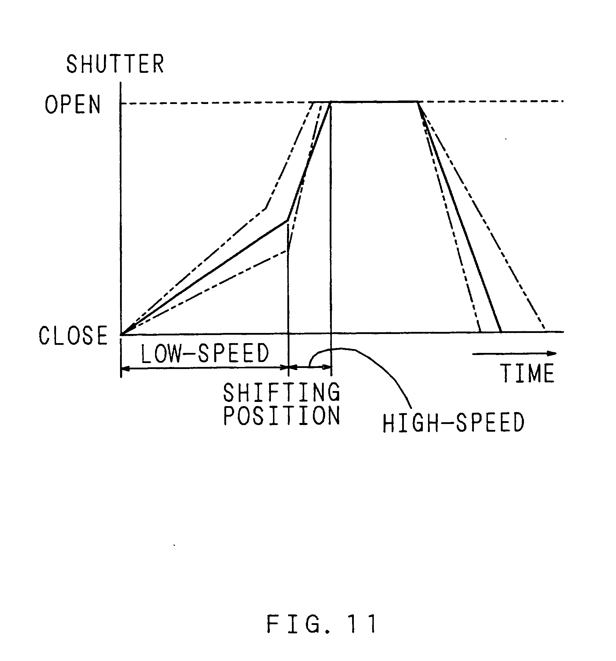

Namely, as shown in FIGS. 9 through 11, the low-speed and high-speed values in the state that the seeding shutter is opened determined by the opening determinators 19 and 20 are inputted into the controller 22, and the seeds A are introduced into the seed shooter 10 so that the seeding shutter 11 is started to be opened. Just thereafter, the seeding shutter 11 is gradually opened at the low-speed, and when a suitable open state (for example, half-opened) of the seeding shutter 11 is detected by the speed shifting position sensor 21 during the opening operation, the seeding shutter 11 is shifted into the high-speed so as to be opened at a high-speed the latter half of the opening operation. When the seeding is completed by opening the seeding shutter 11 fully, the seeding shutter 11 is closed at a high-speed. Just after the introduction shown in FIG. 9(1), when the seeding shutter 11 is opened at a low-speed as shown in FIG. 9(2), the seeds A whose postures are not aligned on the seeding shutter 11 are aligned in a transversal stabilized state along the inner wall surface of the seed shooter 10. In the latter-half opening state which is just before the discharge shown in FIG. 9(3), the seeding shutter 11 is opened promptly so that the postures of the seeds A are prevented from disordering such as rotating. As a result the seeds A in the aligned posture are discharged, and thus the accuracy of the alignment and seeding work is improved.

In this case, since the most suitable shutter opening speeds exist according to respective types of the seeds A, the most suitable low-speed and high-speed shutter opening speeds can be stepless-regulated accordingly by the opening determinators 19 and 20.

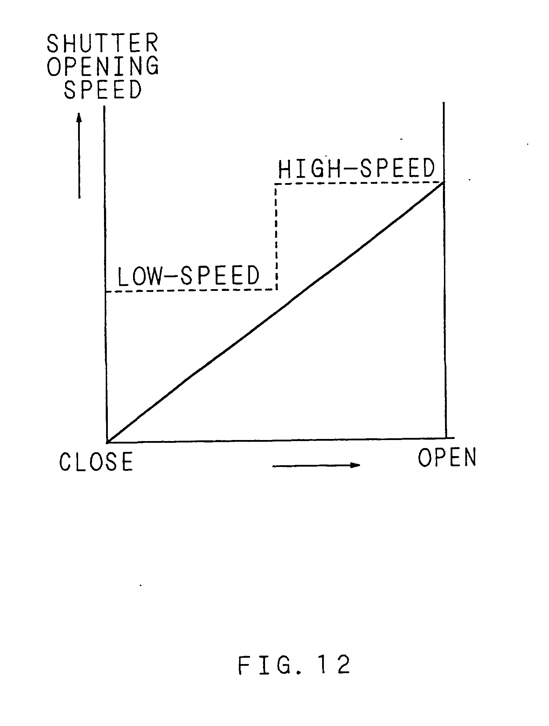

Further, as represented by a broken line in FIG. 12, besides that the opening speed of the seeding shutter 11 is shifted into the two steps, the low-speed or high-speed, the functions and effects which are the same as those in the aforementioned embodiment can be obtained by a constitution such that, as represented by a solid line, as the opening speed of the seeding shutter 11 is shifted into the close to the open state, the opening speed is stepless-regulated.

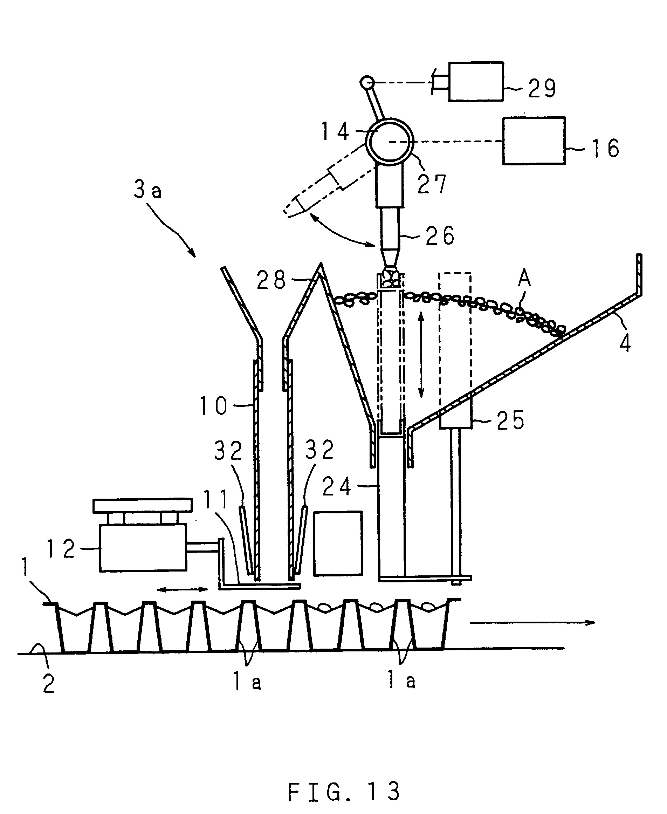

FIG. 13 shows a seed-quantitative seeding machine 3a whose seeding hopper is fixed in a position, and it has a seed hopper 4, a quantitative seed rack 24, an elevating cylinder 25, a plurality of seed suction nozzles 26, a nozzle supporting tube 27, an introduction pipe 28, a nozzle moving cylinder 29, a seed shooter 10, seeding shutter 11, and a shutter open/close control motor 12. The seed hopper 4, whose position is fixed, houses seeding seeds A. The quantitative seed rack 24 raises a constant number of the seeds A (5 to 6) from the seed hopper 4 to a constant height. The elevating cylinder 25 raises and lowers the quantitative seed rack 24. The seed suction nozzles 26, which are laterally aligned, suck the quantitative seeds A on the quantitative seed rack 24 which are raised to the constant height one by one by means of a vacuum suction force. The nozzle supporting tube 27, in which a suction path 14 is formed, fixes the base ends of the seed suction nozzles 26 and connects them with each nozzle hole. The introduction pipe 28 brings the seeds A to be sucked adjacently to the seed hopper 4 so as to discharge them to the tips of the seed suction nozzles 26. The nozzle moving cylinder 29 moves the tips of the seed suction nozzles 26 above the quantitative seed rack 24 or introduction pipe 28. The seed shooter 10 brings the seeds A to be introduced below the introduction pipe 28 so as to drop them downward. The seeding shutter 11 opens/closes the lower end opening of the seed shooter 10. The shutter open/close control motor 12 controls the seeding shutter 11 to perform the opening/closing operation. Moreover, the seeding machine 3a is constituted so that one seed A sucked to the tip of the suction nozzle 26 is introduced into the seed shooter 10 via the introduction pipe 28, and seeding is carried out while the seeding shutter 11 is opened.

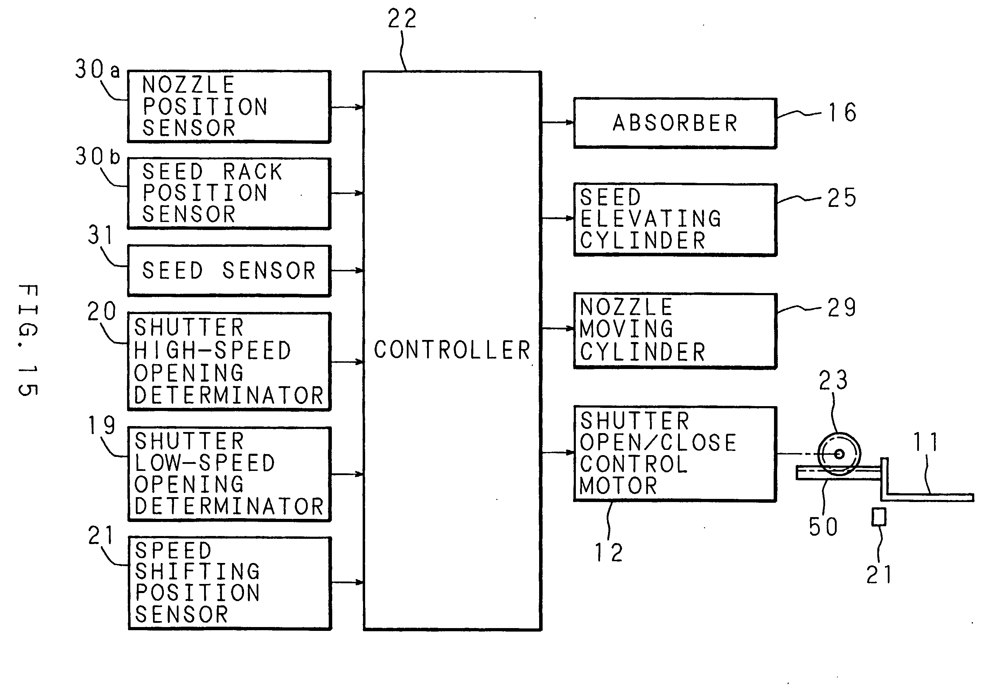

Further, as shown in FIG. 15, the seeding machine has a nozzle position sensor 30a, a seed rack position sensor 30b, a seed sensor 31, and an absorber 16. The nozzle position sensor 30a detects moving positions of the seed suction nozzles 26. The seed rack position sensor 30b detects an elevating position of the quantitative seed rack 24. The seed sensor 31 detects the seeds A on the seeding shutter 11. The absorber 16 generates a vacuum suction force in the suction path 14. These sensors 30a, 30b, and 31 and the speed shifting position sensor 21 and the opening determinators 19 and 20 are connected with inputs of the controller 22. And the absorber 16, the cylinders 25 and 29, and the shutter open/close control motor 12 are connected with outputs of the controller 22.

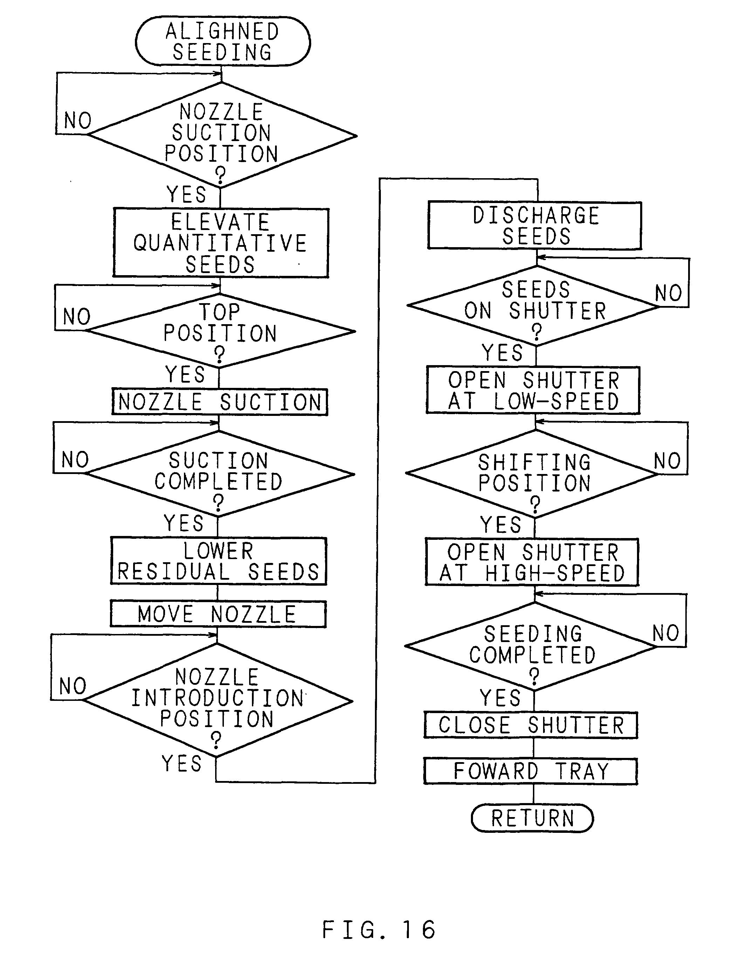

As shown in FIG. 16, when the seed suction nozzles 26 are positioned in a nozzle suction position above the quantitative seed rack 24, the seeds A on the quantitative seed rack 24 is raised so as to approach the closest to the seed suction nozzles 26. At this time, the seeds A are sucked to the tip of the seed suction nozzle 26 by the vacuum suction force one by one, and thereafter the residual seeds A on the quantitative seed rack 24 are lowered, and the seed suction nozzles 26 are moved towards the introduction pipe 28. The sucked seeds A are discharged into the seed shooter 10 via the introduction pipe 28, and when the discharged seeds A are on the seeding shutter 11, as mentioned above, the seeding shutter 11 is opened at the low-speed in the first half opening operation and at the high-speed in the latter half opening operation so that aligned seeding is carried out. Thereafter, the seeding shutter 11 is closed at the high-speed, and the seeding tray 1 is advanced by one pitch for a pot so that the pot portion 1a for the next seeding waits below the seed shooter 10.

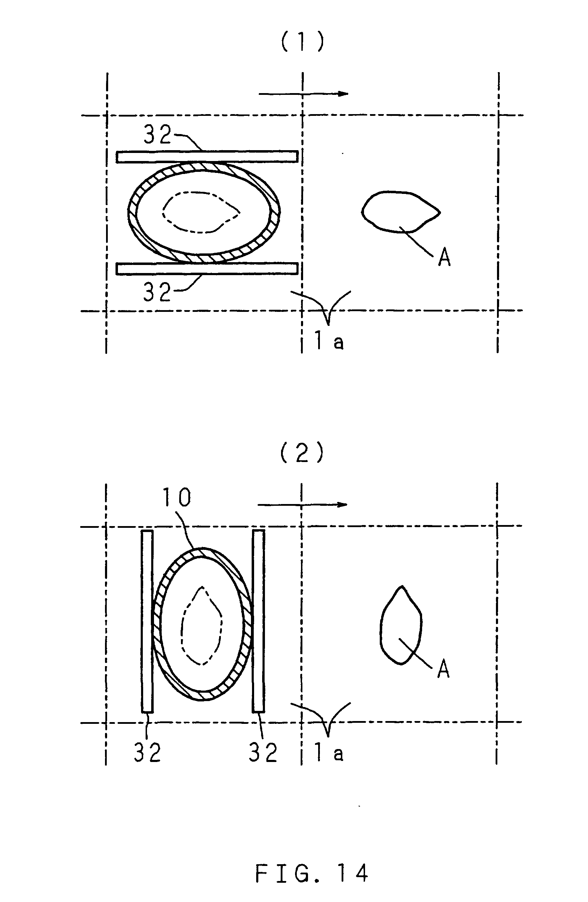

In addition, as shown in FIG. 14, the seed shooter 10 is made of soft and flexible material and at least its lower end has a circular pipe shape. A pair of movable pressing members 32, which are provided so as to face each other via the seed shooter 10, are moved at the lower end of the seed shooter 10, and the cross section of the lower end of the seed shooter is deformed into a oval shape by the applied pressure to the pressing member 32 so that the aligned seeding in which the postures of the seeds A are aligned is made to be possible. Simultaneously, forward-backward seeding in which the longitudinal direction (longer diameter portion) of the seeds A are set in the forward-backward direction with respect to the respective pot portions 1a, laterally aligned as shown in FIG. 14(1), and right-left seeding in which the longitudinal direction of the seeds A is set in the right-left direction as shown in FIG. 14(2), are made to be possible.

Moreover, in this case, when the movement of the pressing members 32 is adjusted by operating adjusting means for adjusting the movement of the pressing members 32, the applied pressure of the pressing members 32 is suitably adjusted, and the oval shape of the lower end cross section of the seed shooter 10 is deformed so as to have various dimensions. As a result, various seeds of such as a cucumber and a pumpkin can put into the single seed shooter 10, so even if flat state and size of the seeds A are varied according to types of the seeds A, the single seed shooter 10 can be used widely for the various seeds A because of its opening which suitably copes with the various seeds A without inconvenience such that the longitudinal direction (longer diameter portion) of the seeds A are not caught in the seed shooter 10.

Here, only the lower end of the seed shooter 10 may be made of soft and flexible material, and such a seed shooter 10 made of soft and flexible material may be used in the aforementioned seeding machine 3.

The respective embodiments referred to the relationship that the seeds A having various sizes and shapes are aligned in a uniform direction by a relative motion between the seed shooter 10 and seeding shutter 11, but the present invention is used effectively for the case where, besides the seeds A, products such as cucumbers and pumpkins whose sizes and shapes are varied are aligned. The present invention is used for, for example, a sorting work in sorting (grading) facilities in which vegetables and fruits are aligned in a uniform direction, a packing work in a packing machine in which vegetables and fruits are aligned in a uniform direction, a processing work in food processing facilities in which vegetables and fruits are aligned in a uniform direction, and hulled ratio and class judgment work in which threshed and unpolished rice is aligned in a uniform direction in a rice hulling machine.

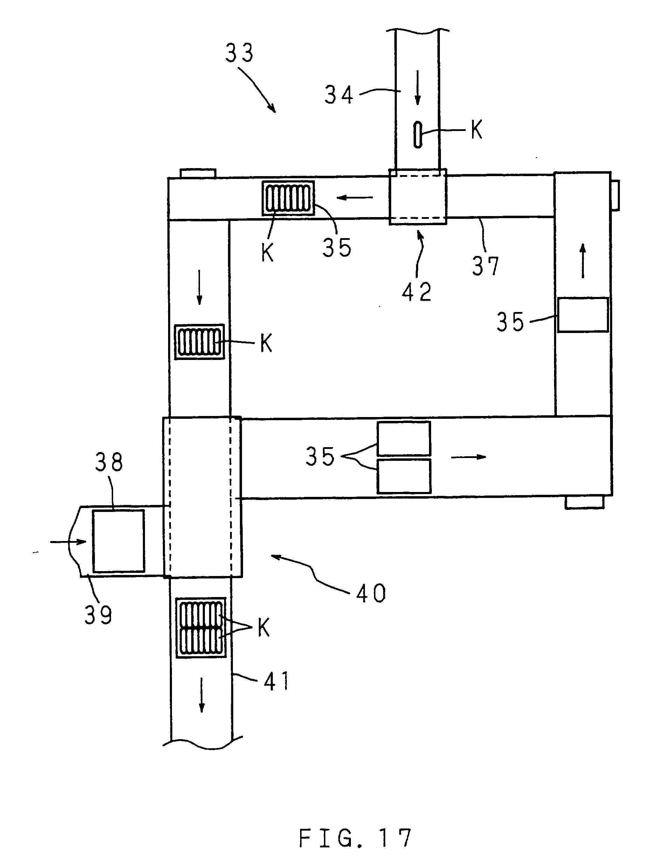

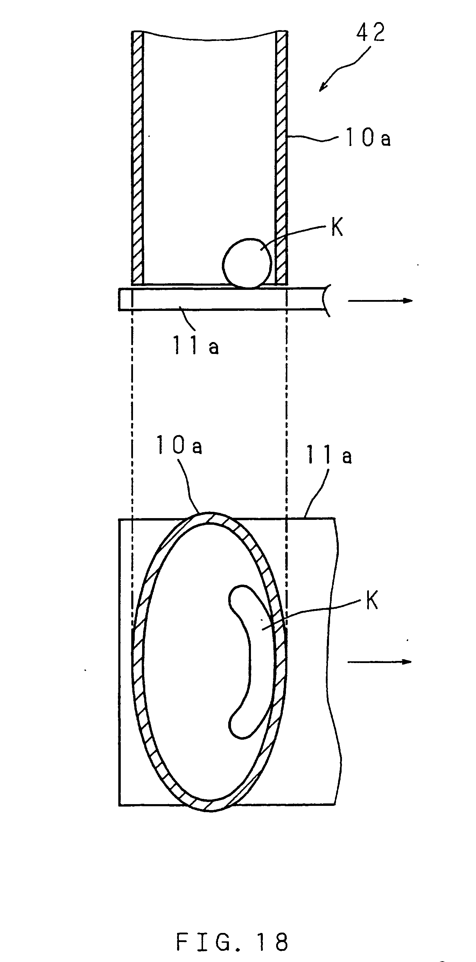

FIGS. 17 and 18 show a cucumber packing machine 33 for aligning cucumbers K to be aligned in a uniform direction and packing them as one example. The cucumber packing machine 33 has a transport conveyor 34, an endless-type circulating conveyor 37, a box transport conveyor 39, a packing device 40, and a carrying-out conveyor 41. The transport conveyor 34 supplies the harvested cucumbers K. The circulating conveyor 37 place the cucumbers K from the transport conveyor 34 into a tray 35 so as to successively transports them to a packing position. The transport conveyor 39 transports a packing box 38 at the packing position. The packing device 40 packs the cucumbers K in the packing box 38 at the packing position. The carrying-out conveyor 41 carries out the packing box 38 into which the cucumbers K were packed. An aligning apparatus 42, which is composed of a seed shooter 10a as a guide member and a seeding shutter 11a as a mounting member, is provided in a joint portion between the transport conveyor 34 and circulating conveyor 37, and this apparatus aligns the cucumbers K from the transport conveyor 34 in a uniform direction so as to put onto the tray 35. Similarly to the relationship between the seed shooter 10 and the seeding shutter 11 in the aforementioned embodiments, the posture of the cucumbers K is aligned in a uniform direction (in FIG. 18, the opening direction of the seeding shutter 11a intersects perpendicularly to the longitudinal direction of the cucumbers K) by the relative motion between the seed shooter 10a and seeding shutter 11a for varying the opening speed of the seed shutter 11a. Therefore, the shapes and sizes of the seed shooter 10a and seeding shutter 11a, whose shapes and sizes are suitable for objects to be aligned, are used.

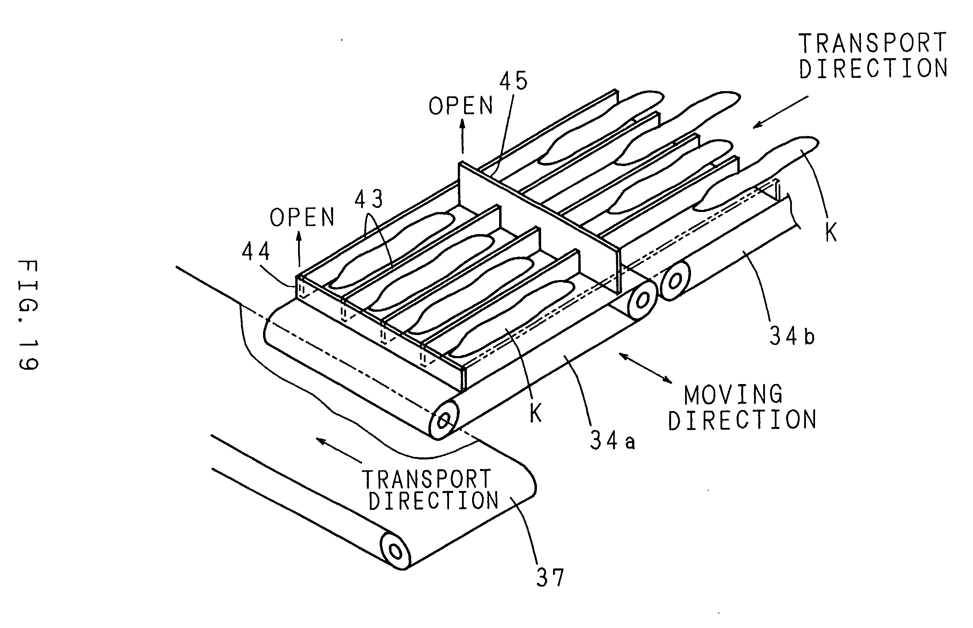

In addition, FIG. 19 shows an alignment apparatus 42 which is constituted so that a guide member 43, for arranging cucumbers K in plural lines so as to guide them in the vertical posture, is provided above transport conveyors 34a and 34b as mounting members for supplying the harvested cucumbers K, and forward and backward shutters 44 and 45, for maintaining one cucumber in each line on the transport surface of the transport conveyor 34a on the feed end side, are provided so that the transport conveyor 34a can move (one-way motion or round-trip motion) in a direction which intersects perpendicularly to the transport direction. When the cucumbers K stay between the forward and backward shutters 44 and 45 on the transport conveyor 34a, the transport conveyor 34a is moved in the direction which intersects perpendicularly to the transport direction, the longitudinal direction of the cucumbers K is along the guide member 43 in static and fixed state so that its posture is adjusted. Thereafter, when the shutters 44 and 45 are opened, the cucumbers K which are in the vertical posture and are aligned in a sideway line on the transport surface of the transport conveyor 34a, are fed into the circulating conveyor 37.

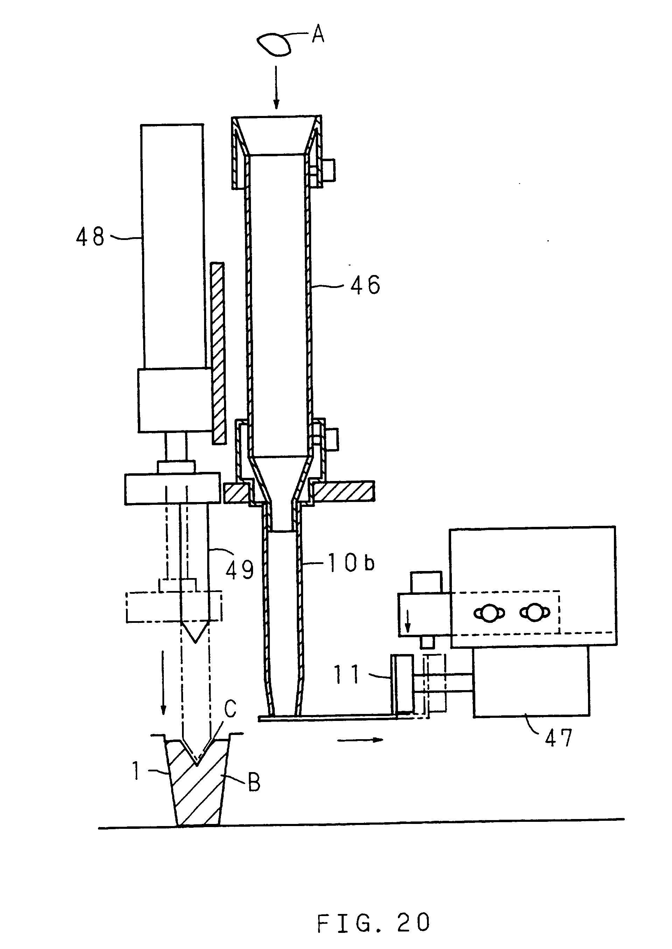

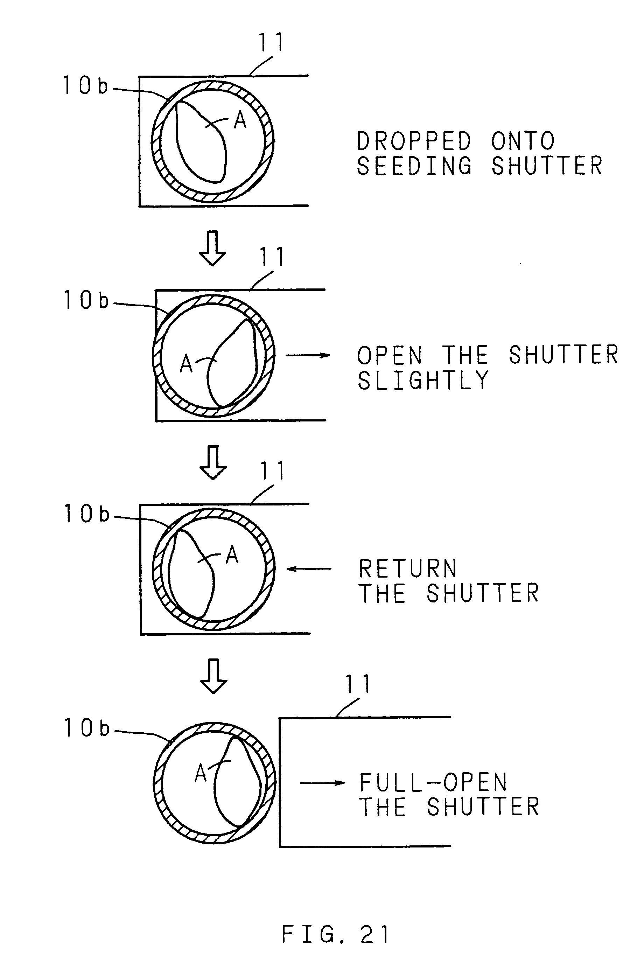

Further, FIGS. 20 and 21 show a constitution which opens the seeding shutter 11 at two steps. In this constitution, a cylindrical seed shooter 10b, for introducing the seeds A in the seed hopper 4 via a cylindrical upper guide body 46, and the seeding shutter 11, for opening/closing the lower end opening of the seed shooter 10b using an open/close cylinder 47, are provided, and the seeds A, which are discharged out of the seed shooter 10b when the seeding shutter 11 is opened, are dropped into a V-shaped seeding groove C which is formed by a suppressing tool 49 elevated by a suppression elevating cylinder 48. As shown in FIG. 21, at the first step which is the initial opening operation of the seeding shutter 11, the seeding shutter 11 is opened slightly, and the seeds A are brought into contact with an inner wall of the cylindrical seed shooter 10b and are aligned. When the seeding shutter 11 is returned to the full-closed position, also the seeds A in the standing posture are laid so as to be in the sideway direction. When the seeding shutter 11 is in the second step, namely, in the full-open state, the seeds A are aligned by the seed shooter 10b, and the dropping position of the seeds A is regulated so that the seeds A, which are aligned in the sideway posture, are dropped into the seeding groove C on the nutritious soil B in the seeding tray 1 at the fixed position. As a result, the seeding whose alignment accuracy is improved is carried out. Namely, after the seeding shutter 11 is moved in one direction on the open/close side, it is moved in the opposite direction (first step), and it is full-opened (second step). As a result, the alignment accuracy is improved, and this operation may be repeated plural times.

### INDUSTRIAL APPLICABILITY

As mentioned above, the present invention is effective as an alignment apparatus for flat seeds, and as an alignment apparatus for mechanically selecting, packing, processing, etc. products having a length.

## Claims

1. An alignment apparatus comprising: a guide member (10) for defining an alignment direction of object (A) to be aligned whose alignment direction is predetermined; and a mounting member (11) for mounting the object (A) to be aligned on a mounting surface thereof; wherein posture of the object (A) to be aligned is aligned in a uniform direction by a relative motion between said guide member (10) and said mounting member (11) in a state that the object (A) to be aligned is mounted on said mounting surface, **characterized in that**
said mounting member (11) performs against the guide member (10) sequential operations including: a first operation for performing a relative displacement in one direction; a second operation for performing a relative displacement in an opposite direction to said one direction; and a third operation for performing a relative displacement in said one direction whose displacement amount is larger than the same at said second operation, whereby,
during said first operation, when the object (A) to be aligned is not in contact with an inner side wall of said guide member (10), an alignment direction of the object (A) to be aligned is orientated to the alignment direction defined by said guide member (10),
during said second operation, when the object (A) to be aligned has been in contact with said inner side wall of said guide member (10) before said first operation started, the object (A) to be aligned is separated from said inner side wall of said guide member (10), and
during said third operation, an alignment direction of the object (A) to be aligned is orientated to the alignment direction defined by said guide member (10).

2. An alignment apparatus for seeding machine comprising : a seed shooter (10) for introducing seeds (A) from a seed hopper (4) thereto one by one; and a seeding shutter (11) for opening/closing a lower end exit of said seed shooter (10) ; wherein seeding is performed by posturing, the seed (A) by a relative motion between said seed shooter (10) and said seeding shutter (11) in a state that the seed (A) is mounted on said seeding shutter (11), and an opening operation of said seeding shutter (11), **characterized in that**
said seeding shutter (11) performs against said seed shooter (10) sequential operations including: a first operation for performing a relative displacement in the opening direction; a second operation for performing a relative displacement in closing direction opposite to said opening direction; and a third operation for performing a relative displacement in said opening direction so as to be fully opened, whereby,
during said first operation, when the seed (A) is not in contact with an inner side wall of said seed shooter (10), an alignment direction of the seed (A) is orientated to the alignment direction defined by said seed shooter (10) by bringing the seed (A) into contact with said inner side wall of said seed shooter (10),
during said second operation, when the seed (A) has been in contact with said inner side wall of said seed shooter (10) before said first operation started, the seed (A) is separated from said inner side wall of said seed shooter (10), and
during said third operation, an alignment direction of the seed (A) is orientated to the alignment direction defined by said seed shooter (10).

3. The alignment apparatus as set forth in claim 2, **characterized in that** an opening speed of said seeding shutter (11) becomes faster in the second half than the first half during said third operation.

4. The alignment apparatus as set forth in claim 2, **characterized in that** a shape of the exit of said seed shooter (10) can be deformed so that a seeding direction of the seed is changed in forward-backward and right-left directions.

5. The alignment apparatus as set forth in claim 4, **characterized in that** at least exit portion of said seed shooter (10) has flexibility, and
a pressing member (32) is provided beside said exit portion so as to be movable.

6. The alignment apparatus as set forth in claim 2, **characterized in that** a shape of said exit of said seed shooter (10) can be deformed according to shapes of various seeds (A).

7. The alignment apparatus as set forth in claim 6, **characterized in that** at least exit portion of said seed shooter (10) has flexibility, and a movable pressing member(32) is provided beside said exit portion so that its displacement can be adjusted.

## Patentansprüche

1. Eine Ausrichtungsvorrichtung, umfassend: ein Führungselement (10) zum Definieren einer Ausrichtungsrichtung eines auszurichtenden Objekts (A), dessen Ausrichtungsrichtung vorbestimmt ist; und ein Montageelement (11) zur Montagen des auszurichtenden Objekts (A) auf einer Montagefläche davon; wobei eine Haltung des auszurichtenden Objekts (A) in einer einheitlichen Richtung durch eine relative Bewegung zwischen dem Führungselement (10) und dem Montageelement (11) ausgerichtet wird, in einem Zustand, in dem das auszurichtende Objekt (A) auf der Montagefläche montiert wird, **dadurch gekennzeichnet, dass**
das Montageelement (11) gegen das Führungselement (10) sequenzielle Vorgänge durchführt, umfassend: eine erste Operation zum Durchführen einer relativen Verlagerung in eine Richtung; eine zweite Operation zum Durchführen einer relativen Verlagerung in eine entgegengesetzte Richtung zu der einen Richtung; und eine dritte Operation zum Durchführen einer relativen Verlagerung in die eine Richtung, deren Verlagerungsbetrag größer ist als der Gleiche bei der zweiten Operation, wobei
während der ersten Operation, wenn das auszurichtende Objekt (A) nicht mit einer inneren Seitenwand des Führungselements (10) in Kontakt ist, eine Ausrichtungsrichtung des auszurichtenden Objekts (A) in die Ausrichtungsrichtung orientiert wird, die durch das Führungselement (10) definiert ist,
während der zweiten Operation, wenn das auszurichtende Objekt (A) mit der inneren Seitenwand des Führungselements (10) in Kontakt gewesen ist bevor die erste Operation startete, das auszurichtende Objekt (A) von der inneren Seitenwand des Führungselements (10) getrennt wird, und
während der dritten Operation eine Ausrichtungsrichtung des auszurichtenden Objekts (A) in der Ausrichtungsrichtung orientiert wird, die durch das Führungselement (10) definiert ist.

2. Eine Ausrichtungsvorrichtung für eine Sämaschine, umfassend: eine Saatgutrutsche (10) zum nacheinander darin Einbringen von Saatgut von einem Saatgutbehälter (4); und einen Saatgutverschluss (11) zum Öffnen/Schließen eines unteren Endausgangs der Saatgutrutsche (10); wobei ein Aussäen durch in Haltung bringen des Saatguts (A) durch eine relative Bewegung zwischen der Saatgutrutsche (10) und dem Saatgutverschluss (11), in einem Zustand, in dem das Saatgut (A) auf dem Saatgutverschluss (11) gehalten wird, und ein Öffnungsvorgang des Saatgutverschlusses (11) durchgeführt wird, **dadurch gekennzeichnet, dass**
der Saatgutverschluss (11) gegen die Saatgutrutsche (10) sequenzielle Vorgänge durchführt, umfassend: eine erste Operation zum Durchführen einer relativen Verlagerung in die Öffnungsrichtung; eine zweite Operation zum Durchführen einer relativen Verlagerung in Verschlussrichtung entgegengesetzt der Öffnungsrichtung; und eine dritte Operation zum Durchführen einer relativen verlagerung in die Öffnungsrichtung, um ganz geöffnet zu sein, wodurch,
während der ersten Operation, wenn das Saatgut (A) nicht mit einer inneren Seitenwand der Saatgutrutsche (10) in Kontakt ist, eine Ausrichtungsrichtung des Saatguts (A) in der Ausrichtungsrichtung orientiert wird, welche durch die Saatgutrutsche (10) durch in Kontakt bringen des Saatguts (A) mit der inneren Seitenwand der Saatgutrutsche (10) definiert ist,
während der zweiten Operation, wenn das Saatgut (A) mit der inneren Seitenwand der Saatgutrutsche (10) in Kontakt gewesen ist bevor dir erste Operation startete, das Saatgut (A) von der inneren Seitenwand der Saatgutrutsche (10) getrennt wird, und
während der dritten Operation eine Ausrichtungsrichtung des Saatguts (A) in die Ausrichtungsrichtung orientiert wird, welche durch die Saatgutrutsche (10) definiert ist.

3. Die Ausrichtungsvorrichtung nach Anspruch 2, **dadurch gekennzeichnet, dass** eine Öffnungsgeschwindigkeit des Saatgutverschlusses (11) während der dritten Operation in der zweiten Hälfte schneller wird als in der ersten Hälfte.

4. Die Ausrichtungsvorrichtung nach Anspruch 2, **dadurch gekennzeichnet, dass** eine Form des Ausgangs der Saatgutrutsche (10) so verformt werden kann, dass eine Särichtung des Saatguts in vorwärts-rückwärts und rechts-links Richtungen geändert wird.

5. Die Ausrichtungsvorrichtung nach Anspruch 4, **dadurch gekennzeichnet, dass** zumindest ein Ausgangsabschnitt der Saatgutrutsche (10) Flexibilität besitzt, und ein Presselement (32) neben dem Ausgangsabschnitt vorgesehen ist, um bewegbar zu sein.

6. Die Ausrichtungsvorrichtung nach Anspruch 2, **dadurch gekennzeichnet, dass** eine Form des Ausgangs der Saatgutrutsche (10) gemäß Formen verschiedenen Saatguts (A) verformt werden kann.

7. Die Ausrichtungsvorrichtung nach Anspruch 6, **dadurch gekennzeichnet, dass** zumindest ein Ausgangsabschnitt der Saatgutrutsche (10) Flexibilität besitzt, und ein bewegbares Presselement (32) neben dem Ausgangsabschnitt vorgesehen ist, so dass seine Verlagerung angepasst werden kann.

## Revendications

1. Appareil d'alignement comportant un élément de guidage (10) pour définir une direction d'alignement de l'objet (A) à aligner, dont la direction d'alignement est prédéterminée, et un élément de fixation (11) pour fixer l'objet (A) à aligner sur une surface de fixation de celui-ci, dans lequel la position de l'objet (A) à aligner est alignée dans une direction uniforme par un mouvement relatif entre ledit élément de guidage (10) et ledit élément de fixation (11) dans un état tel que l'objet (A) à aligner est fixé sur ladite surface de fixation, **caractérisé en ce que**
ledit élément de fixation (11) réalise par rapport à l'élément de guidage (10) des opérations séquentielles comprenant une première opération pour réaliser un déplacement relatif dans une direction, une deuxième opération pour réaliser un déplacement relatif dans une direction opposée à ladite direction et une troisième opération pour réaliser un déplacement relatif dans ladite direction dont la distance de déplacement est supérieure à celle de la deuxième opération, moyennant quoi
pendant ladite première opération, lorsque l'objet (A) à aligner n'est pas en contact avec une paroi latérale interne dudit élément de guidage (10), une direction d'alignement de l'objet (A) à aligner est orientée par rapport à la direction d'alignement définie par ledit élément de guidage (10),
pendant ladite deuxième opération, lorsque l'objet (A) à aligner a été en contact avec ladite paroi latérale interne dudit élément de guidage (10) avant que ladite première opération n'ait commencé, l'objet (A) à aligner est détaché de ladite paroi latérale interne dudit élément de guidage (10) et
pendant ladite troisième opération, une direction d'alignement de l'objet (A) à aligner est orientée par rapport à la direction d'alignement définie par ledit élément de guidage (10).

2. Appareil d'alignement pour une machine à semer comportant un éjecteur de semence (10) pour introduire des semences (A) à partir d'un trémie de semences (4) un par un et un obturateur (11) pour l'ouverture/la fermeture d'une sortie d'extrémité inférieure dudit trémie de semences (10), dans lequel l'ensemencement est réalisé par le placement de la semence (A) par un mouvement relatif entre ledit éjecteur de semence (10) et ledit obturateur (11) dans un état tel que la semence (A) est fixée sur ledit obturateur (11) et une opération d'ouverture dudit obturateur de semis (11), **caractérisé en ce que**
ledit obturateur (11) réalise par rapport au dit éjecteur de semence (10) des opérations séquentielles comportant une première opération pour réaliser un déplacement relatif dans la direction d'ouverture, une deuxième opération pour réaliser un déplacement relatif dans la direction de fermeture opposée à ladite direction d'ouverture et une troisième opération pour réaliser un mouvement relatif dans ladite direction d'ouverture de manière à être complètement ouvert, moyennant quoi
pendant ladite première opération, lorsque la semence (A) n'est pas en contact avec une paroi latérale interne dudit éjecteur de semence (10), une direction d'alignement de la semence (A) est orientée par rapport à la direction d'alignement définie par ledit éjecteur de semence (10) par l'amenée de la semence (A) en contact avec ladite paroi latérale interne dudit éjecteur de semence (10),
pendant ladite deuxième opération, lorsque la semence (A) a été en contact avec ladite paroi latérale interne dudit éjecteur de semence (10) avant que ladite première opération n'ait démarré, la semence (A) est détachée de ladite paroi latérale interne dudit éjecteur de semence (10) et
pendant ladite troisième opération, une direction d'alignement de la semence (A) est orientée par rapport à la direction d'alignement définie par ledit éjecteur de semence (10).

3. Appareil d'alignement énoncé dans la revendication 2, **caractérisé en ce qu'**une vitesse d'ouverture dudit obturateur (11) devient plus rapide dans la seconde moitié que dans la première moitié pendant ladite troisième opération.

4. Appareil d'alignement énoncé dans la revendication 2, **caractérisé en ce qu'**une forme de la sortie dudit éjecteur de semence (10) peut être déformée de telle sorte qu'une direction d'ensemencement de la semence soit modifiée en directions avant-arrière et droite-gauche.

5. Appareil d'alignement énoncé dans la revendication 4, **caractérisé en ce qu'**au moins la partie de sortie dudit éjecteur de semence (10) est flexible et un élément de compression (32) est prévu à côté de ladite partie de sortie de manière à être mobile.

6. Appareil d'alignement énoncé dans la revendication 2, **caractérisé en ce qu'**une forme de ladite sortie dudit éjecteur de semence (10) peut être déformée selon les formes des différentes semences (A).

7. Appareil d'alignement énoncé dans la revendication 6, **caractérisé en ce qu'**au moins la partie de sortie dudit éjecteur de semence (10) est flexible et un élément de pression mobile (32) est prévu à côté de ladite partie de sortie de telle sorte que son déplacement puisse être réglé.
